# EUROPÄISCHE PATENTSCHRIFT

(11) **EP 0 622 023 B1**
(45) Veröffentlichungstag und Bekanntmachung des Hinweises auf die Patenterteilung: **13.08.1997**
(21) Anmeldenummer: 93116217.6
(22) Anmeldetag: 07.10.1993
(51) Int. Cl.: A23B 7/06, A23B 7/005, A23B 7/157, A23B 7/01, A23B 7/152, A23B 7/00

(54) **Nasskonservierungsverfahren für Gemüse**
Method for preserving moist vegetables
Procédé de conservation de légumes à l'état humide

(30) Priorität: 09.10.1992 DE 4233985
(43) Veröffentlichungstag der Anmeldung: 02.11.1994
(73) Patentinhaber: UNIVERSITÄT HOHENHEIM, D-70559 Stuttgart (DE)
(72) Erfinder: Gierschner, Karlheinz, Prof. Dr.-Ing., D-70794 Filderstradt (DE); Philippos, Shukry Gabriel, Dr.rer.nat., D-70771 Leinfelden-Echterdingen (DE)
(74) Vertreter: Niemeyer, Hans

(56) Entgegenhaltungen:
- EP-A- 0 072 419
- EP-A- 0 124 627
- EP-A- 0 339 112
- DE-C- 608 838
- FR-A- 2 269 875
- FR-A- 2 394 982
- US-A- 3 889 009

## Beschreibung

Die Erfindung betrifft ein Verfahren zum Konservieren von Gemüse, bei dem das Gemüse in einem ersten Behandlungsschritt für die Dauer eines ersten vorgegebenen Zeitintervalls einer in einem ersten vorgegebenen Temperaturintervall liegenden ersten Temperatur ausgesetzt wird, und in einem zweiten Behandlungsschritt, der unmittelbar auf den ersten Behandlungsschritt folgt, für die Dauer eines zweiten vorgegebenen Zeitintervalls, welches kürzer ist als das erste Zeitintervall, einer in einem zweiten vorgegebenen Temperaturintervall, welches höhere Temperaturen umfaßt als das erste Temperaturintervall, liegenden zweiten Temperatur, die höher ist als die erste Temperatur.

Ein Verfahren dieser Art ist aus der EP-0 339 112 B1 bekannt, wobei es bei dem bekannten Verfahren speziell um das Blanchieren von Kartoffelstücken in zwei Stufen geht. Gemäß dem bekannten Verfahren werden die Kartoffelstücke in einer ersten Stufe in Wasser bei einer Temperatur von 55°C bis 70°C für einen Zeitraum von 10 bis 30 Minuten erhitzt und anschließend in einer unmittelbar folgenden zweiten Stufe einem zweiten Behandlungsschritt unterworfen, der bei einer Temperatur von 80 Bis 100°C für einen Zeitraum von 30 s bis 20 min. in Wasser oder Dampf durchgeführt wird.

Bei dem bekannten Verfahren dient das zweistufige Blanchieren der Kartoffelstücke der Vorbereitung eines abschließenden Konservierungsschrittes, in dessen Verlauf die Kartoffelstücke eingefroren werden. Die beiden bei unterschiedlichen Temperaturen für Zeitintervalle unterschiedlicher Dauer durchgeführten Behandlungsschritte bei erhöhter Temperatur stellen also noch kein vollständiges Konservierverfahren dar, sondern dienen lediglich der Vorbereitung der Konservierung durch Einfrieren. Dabei soll gemäß den Lehren der zitierten Druckschrift eine Tiefkühlkonserve erhalten werden, die bei der Lagerung für die Dauer eines Jahres oder mehr stabil bleibt und deren Zubereitung zum Verzehr bei einer Temperatur von 200°C für 55 Minuten geschmacklich einwandfreie Kartoffelscheiben mit einer nicht zu weichen Textur ergibt.

Weitere bekannte, zweistufige Blanchierverfahren, bei denen jeweils mindestens ein Behandlungsschritt in Wasser durchgeführt wird und die der Vorbereitung von Gemüse, insbesondere Bohnen und Kartoffeln, bei der Herstellung von Tiefkühlkonserven dienen, sind beschrieben in: Journal of Food Technology (1976), 11, S.313 bis 316; DE-A-23 59 672 und EP-A-0 006 455 B1.

Ausgehend vom Stand der Technik liegt der Erfindung die Aufgabe zugrunde, ein verbessertes Verfahren zum Konservieren von Gemüse anzugeben, nach welchem das der zweistufigen Behandlung unterworfene Gemüse bereits das Endprodukt darstellt, als Dauerkonserve in einem Behälter gelagert werden kann und bei der Entnahme aus dem Behälter für einen sofortigen Verzehr geeignet ist.

Diese Aufgabe wird bei einem gattungsgemäßen Verfahren gemäß der Erfindung dadurch gelöst, daß die Dauer des ersten Zeitintervalls und die erste Temperatur derart gewählt werden, daß durch enzymatisch katalysierte Reaktionen eine Fixierung und Verfestigung der Textur des Gemüses herbeigeführt wird, und daß die Dauer des zweiten Zeitintervalls und die zweite Temperatur so gewählt werden, daß am Ende des zweiten Zeitintervalls ein vorgegebener die Haltbarkeit des so behandelten Gemüses gewährleistender Summen-F-Wert erreicht wird.

Es ist ein besonderer Vorteil des Verfahrens gemäß der Erfindung, daß durch geeignete Wahl der Dauer des ersten Zeitintervalls und der ersten Temperatur in Abhängigkeit von dem jeweils zu konservierenden Gemüse gezielt eine Fixierung und Verfestigung der Textur des Gemüses herbeigeführt wird, die zur Folge hat, daß bei der im Verlauf des zweiten Behandlungsschrittes erfolgenden Pasteurisierung zur Erzielung einer Dauerkonserve kein Weichwerden des Gemüses eintritt, welches über die für den Verzehr des Gemüses erwünschte, gegenüber dem Rohgemüse weichere Textur hinausgeht.

Dabei hat es sich als besonders vorteilhaft erwiesen, wenn die als Aufgußmenge bezeichnete Menge an freiem Wasser bei der Durchführung beider Behandlungsschritte sehr gering gehalten und bis auf 1 Vol.-% des Volumens zwischen den Gemüseteilen und/oder Gemüsestücken reduziert wird, wobei eine Aufgußmenge von 2 bis 8%, insbesondere von maximal 3%, bevorzugt wird.

Der entscheidende Vorteil einer derart geringen, gegenüber den bisher üblichen Aufgußmengen von bis zu 100% drastisch reduzierten Aufgußmenge besteht darin, daß beim Arbeiten nach dem erfindungsgemäßen Verfahren im Gegensatz zu den bisher üblichen Naßkonservierungsprozessen praktisch keine Auslaugeverluste hinsichtlich löslicher, wertgebender Inhaltsstoffe mehr auftreten. Weiterhin wird durch die drastisch reduzierte Aufgußmenge, mit der bei Anwendung des erfindungsgemäßen Verfahrens gearbeitet werden kann, während des ersten Behandlungsschrittes ein unerwünschtes Ausschwemmen von Reaktionsteilnehmern der enzymatisch katalysierten Reaktionen beim ersten Behandlungsschritt zumindest weitgehend unterbunden, so daß die angestrebte Texturstabilisierung vor Durchführung des zweiten Behandlungsschrittes gezielt gefördert und in dem gewünschten Umfang erreicht wird.

Wie bei anderen bekannten Verfahren wird das Gemüse für die Durchführung des erfindungsgemäßen Verfahrens vorzugsweise zu Gemüsepartikeln in Form von Würfeln, Scheiben und dergleichen zerkleinert, so daß es in stückiger Form, d.h. in Form von Gemüsepartikeln, vorliegt, wobei die einzelnen Stücke bzw. Partikel eine Dicke bzw. eine größte Abmessung von 4 bis 15 mm, vorzugsweise von 6 bis 12 mm und insbesondere von 8 bis 10 mm aufweisen.

Beim Konservieren eines derart zerkleinerten Gemüses hat es sich als besonders vorteilhaft erwiesen, wenn die geringe Aufgußmenge dadurch erhalten wird, daß die Gemüsepartikel vor der Durchführung der beiden Behandlungsschritte in ein Tauchbad eingetaucht werden, daß man die Gemüsepartikel dann aus dem Tauchbad heraushebt und abtropfen läßt und daß die abgetropften Gemüsepartikel anschließend zur Durchführung der beiden Behandlungsschritte in einen Behälter gefüllt werden.

Überraschenderweise hat es sich gezeigt, daß die speziell auf die beschriebene Weise erhaltene, geringe Aufgußmenge ausreichend ist, um auch bei einer Temperatur von nur etwa 60-70°C in einem evakuierten Behälter eine ausreichende Menge von Wasserdampf zu erzeugen, der dann beim Erhitzen durch insbesondere zerkleinerten Gemüses bei der Durchführung der beiden Behandlungsschritte für eine schnelle Wärmeübertragung von der Behälteraußenwand zum Gemüse sorgt. Andererseits ist die geringe Sattdampfmenge, die beim Wärmetransport nach den derzeitigen Erkenntnissen der Anmelderin alternierend an der Behälterwand und am Gemüse kondensiert und erneut verdampft wird, weder während des ersten Behandlungsschrittes noch während des zweiten Behandlungsschrittes ausreichend, um ein Auslaugen bzw. Ausschwemmen von löslichen, wertgebenden Inhaltsstoffen des Gemüses zu bewirken. Außerdem hat die geringe im Konservierungsbehälter vorhandene Wassermenge offenbar den Vorteil, daß speziell bei Vorhandensein von durch katalytische Reaktionen fixierten Pektinstrukturen, die im Verlauf des ersten Behandlungsschrittes gewonnen werden, ein unerwünschtes Ausschwemmen von Pektinkomponenten bei der während des zweiten Behandlungsschrittes auftretenden, unvermeidlichen und im Hinblick auf die Textur des fertig konservierten Gemüses auch erwünschte β-Elimination zu vermeiden. Insgesamt wird somit beim Arbeiten nach dem erfindungsgemäßen Verfahren ein Gemüseprodukt bzw. eine Gemüsekonserve erhalten, bei dem bzw. bei der das Gemüse nach Abschluß des zweiten Behandlungsschrittes als ohne Auslaugeverluste gewonnenes, an löslichen, wertgebenden Inhaltsstoffen reiches Gemüse mit der erwünschten Textur vorliegt, d.h. als ein Gemüse, welches zwar durchaus als ein gegartes Gemüse empfunden wird, jedoch im Hinblick auf seine stabilisierte Struktur noch einen "Biß" besitzt und dabei im übrigen hinsichtlich Geruch, Geschmack, Aussehen und Inhaltsstoffen dem eingesetzten Frischgemüse in bisher nicht erreichbarer Weise gleicht.

Der besonders "naturgetreue" Charakter von Gemüsekonserven gemäß der Erfindung kann in Ausgestaltung der Erfindung ggf. noch dadurch gefördert werden, daß, wie oben bereits angedeutet, vor der Durchfürung der beiden Wärmebehandlungsschritte eine Evakuierung des das Gemüse aufnehmenden Behälters bis auf einen Druck von 200 bis 950 mbar, vorzugsweise von 400 bis 945 mbar und insbesondere von 850 bis 900 mbar erfolgt. Durch diese Evakuierung wird die bei der Wärmebehandlung im Inneren des Behälters noch verfügbare Sauerstoffmenge reduziert, so daß dementsprechend auch unerwünschte Oxidationsprozesse reduziert werden. Zusätzlich kann es vorteilhaft sein, wenn der Behälter, bei dem es sich um eine Dose, ein Glas, eine Flasche oder dergleichen handeln kann, nach dem Evakuieren des Behälters teilweise mit einem Inertgas, insbesondere mit Stickstoff, gefüllt wird.

Weitere Einzelheiten und Vorteile des erfindungsgemäßen Verfahrens werden nachstehend anhand von Zeichnungen noch näher erläutert. Es zeigen:
- Fig. 1: eine Zeit/Temperatur-Kurve zur Erläuterung des zweistufigen Verfahrens gemäß der Erfindung;
- Fig. 2: eine schematische Darstellung der Zellstruktur von Gemüse;
- Fig. 3: eine schematische Darstellung des zeitlichen Verlaufs der Temperatur im Inneren eines Behälters in Abhängigkeit vom Anfangsdruck und vom Stickstoffgehalt; und
- Fig. 4: schematische Darstellung zur Erläuterung des Verfestigungseffektes beim ersten Behandlungsschritt.

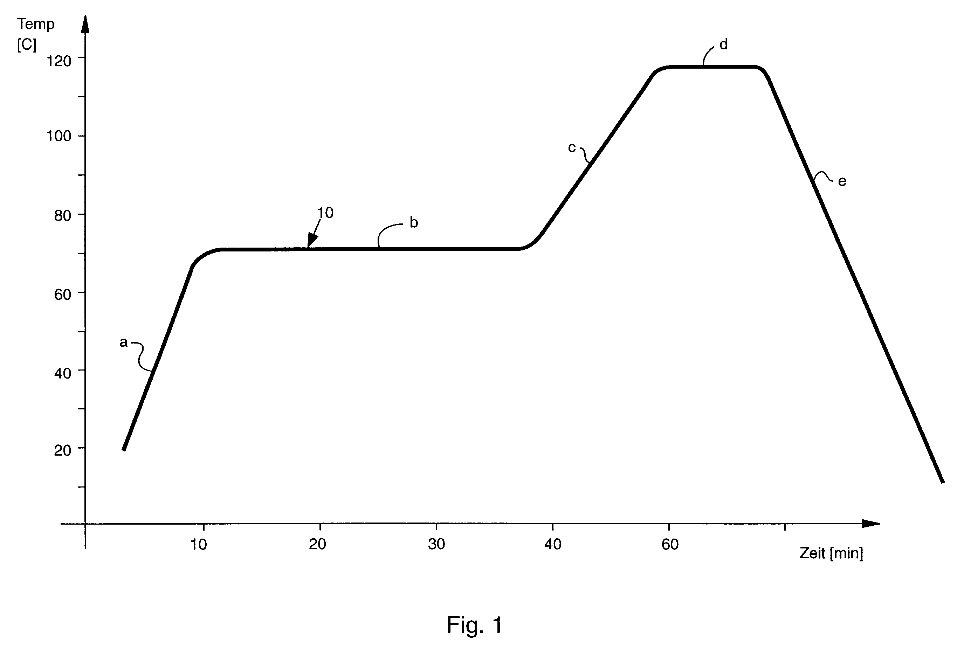

Im einzelnen zeigt Fig. 1 den typischen Zeitverlauf der Temperatur bei der Durchführung des zweistufigen Konservierungsverfahrens gemäß der Erfindung. Man erkennt, daß die in Fig. 1 gezeigte Temperaturkurve c zu Beginn des Prozesses, ausgehend von einer Raumtemperatur von ca. 20°C, auf einem Teilstück a zunächst steil ansteigt und nach etwa 10 min. bei einer Temperatur von etwa 68°C ein Plateau erreicht - Teilstück b der Kurve 10 -, auf dem die Temperatur für ein erstes Zeitintervall von etwa 30 min. konstant gehalten wird. Nachdem eine Gesamtzeit von etwa 40 min. verstrichen ist, folgt nunmehr wieder ein relativ steiles Teilstück c der Kurve 10, bis ein neues Plateau - Teilstück d der Kurve 10 - erreicht ist, bei dem die Temperatur konstant auf einem Wert von etwa 120°C gehalten wird. Schließlich erfolgt gemäß Teilstück e der Kurve 10 ein steiler Temperaturabfall, ggf. bis unter das anfängliche Temperaturniveau, wenn beispielsweise die zuvor in einem zweistufigen Verfahren erhitzten Behälter nach der Konservierung mit kaltem Wasser abgekühlt werden. Steilheit und Dauer des Teilstücks a der Kurve 10 sind relativ unkritisch und davon abhängig, welche Heizeinrichtungen zum Aufheizen der Behälter mit dem zu konservierenden Gemüse zur Verfügung stehen. Ein schnelles Erhitzen, d.h. ein steiler Verlauf der Temperaturkurve ist zum Erreichen einer schnellen Prozeßzykluszeit erwünscht; andererseits ist ein etwas langsamerer Anstieg der Temperatur bis auf das Niveau b unkritisch, da Temperaturen bis zu etwa 70°C die charakteristischen Eigenschaften des Gemüses in einem Zeitintervall von 10 bis 15 min. nicht beeinträchtigen. Auf dem dann erreichten Temperaturniveau gemäß Teilstück b der Kurve 10 ergibt sich nach den Beobachtungen der Anmelderin entscheidende Änderungen in der Textur des zu konservierenden Gemüses, da bei dieser Temperatur gewisse Enzyme, bei Mohrrüben beispielsweise das Enzym Pektin-Esterase, aktiviert werden und eine Verfestigung bzw. Fixierung der Gewebestruktur des Gemüses herbeiführen. Wenn nach dem Abschluß dieses ersten Behandlungsschrittes auf dem genannten Temperaturniveau über den Kurvenabschnitt c das Plateau gemäß Kurvenabschnitt d mit einer Temperatur von ca. 120°C angefahren wird, dann geschieht dies mit dem Ziel, eine Pasteurisierung des Gemüses herbeizuführen, d.h. mit dem Ziel, eine keimfreie Langzeitkonserve zu erhalten, wobei bezüglich des Temperaturniveaus und der Dauer des Kurvenabschnitts d eine solche Steuerung des Verfahrensablaufs beim zweiten Behandlungsschritt erfolgt, daß unter Berücksichtigung der vorausgehenden Wärmebehandlung ein Summen-F-Wert erreicht wird, der, bezogen auf den Sterilisationsgrad bzw. den F-Wert, bei 121°C den Erfordernissen genügt.

Das erfindungsgemäße Verfahren ist dabei insofern besonders vorteilhaft, als während des ersten Behandlungsschrittes gemäß Kurvenabschnitt b über längere Zeit eine Temperatur aufrechterhalten wird, die bei gewissen Chlostridien, beispielsweise dem Chlostridium Botolinum, bereits zu einem Auskeimen führt und damit eine sichere Vernichtung derselben bei der erhöhten Temperatur des zweiten Behandlungsschrittes gewährleistet.

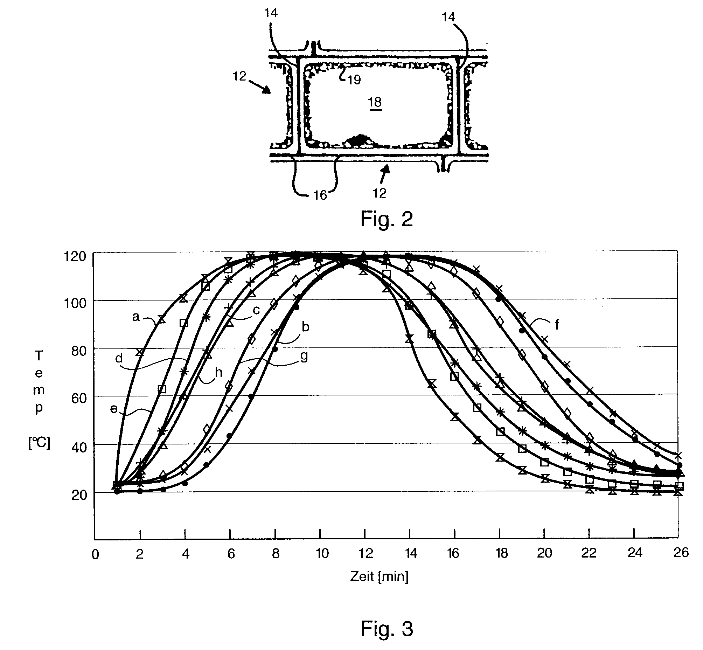

Zur besseren Verdeutlichung des Ablaufs der Strukturänderungen beim ersten Behandlungsschritt soll nachstehend näher auf Fig. 2 der Zeichnung eingegangen werden.

In Fig. 2 ist schematisch eine Zellstruktur angedeutet, bei der zwei Zellen 12 über eine Mittel-Lamelle 14 miteinander verbunden sind. Dabei besitzt jede der Zellen 12 eine Primärwand 16, die eine Vakuole 18 umschließt. Die Vakuole 18 ist von einer semipermeablen Zellmembran 19 umgeben. In und an der Zellmembran 19 befinden sich partikelgebundene Enzyme. Bei einer Temperatur von ca. 70°C werden diese Enzyme freigesetzt und aktiviert, während gleichzeitig aus der Vakuole durch die bei der genannten Temperatur für die betreffenden, ionendurchlässige, semipermeable Membran Iionen, insbesondere Natrium- und/oder Kalziumionen, in die Zellwandstruktur bzw. die Mittel-Lamelle 14 gelangen. Unter der katalytischen Wirkung der Enzyme erfolgt nunmehr gemäß den nachfolgenden, die hypothetische Struktur des Kalzium-Chelates von Pektin zeigenden Strukturformeln I eine Abspaltung von Methanol aus dem Pektin von Primärwand 16 und Mittel-Lamelle 14 und eine dreidimensionale Vernetzung der Pektinmoleküle - diese Deutung entspricht jedenfalls dem derzeitigen Kenntnisstand der Anmelderin -, wobei mit der Vernetzung gleichzeitig ein näheres Aneinanderrücken der Pektinstrukturen im Verlauf dieser Chelatisierung eintritt.

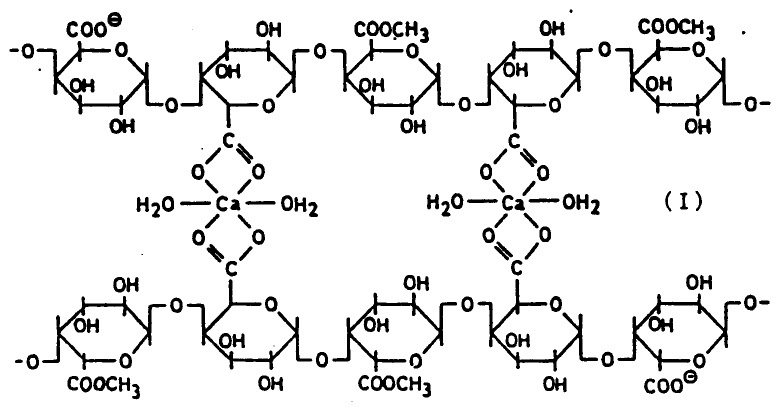

Wenn die auf die beschriebene Weise verfestigte Gewebestruktur anschließend im Verlauf des zweiten Behandlungsschrittes der für die Sterilisation erforderlichen Temperatur von ca. 120°C ausgesetzt wird, dann ergibt sich hinsichtlich der Pektinkomponenten gemäß den nachfolgenden Strukturformeln II eine Spaltung von Pektinketten durch die sogenannte β-Elimination, die zu einer Lockerung der Gewebestruktur führt. Dieser Prozeß wird ganz allgemein beim Kochen von Gemüse ausgenutzt, um dessen relativ harte Textur so zu erweichen, daß das Gemüse gegessen werden kann.

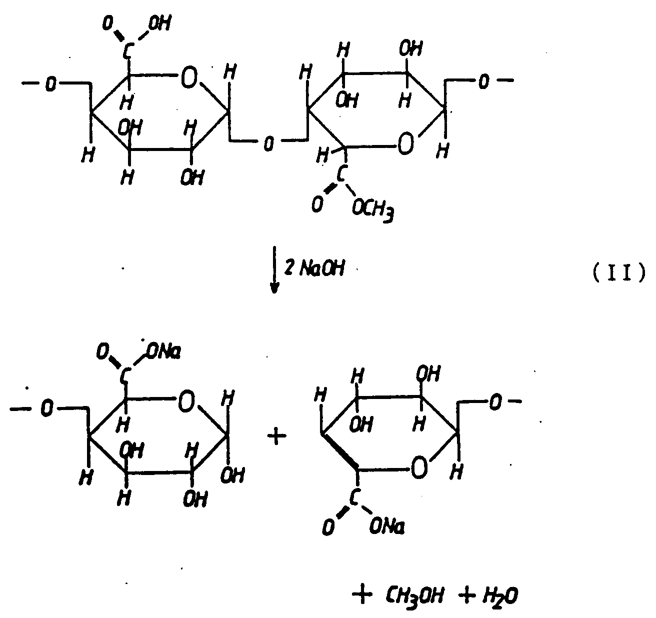

Durch den vorausgegangenen ersten Behandlungsschritt, der einerseits insgesamt zu einer Verdichtung der Struktur und andererseits zu chemisch umgewandelten Pektinkomponenten geführt hat, führt die β-Elimination beim erfindungsgemäßen Verfahren jedoch nicht zu einer üblichen, weichen Gewebestruktur, sondern dazu, daß zwar ein gewisses Erweichen des Gemüses stattfindet, andererseits jedoch ein gewisser "Biß" des Gemüses erhalten bleibt, so daß Gemüsekonserven gemäß der Erfindung vorteilhaft ohne eine weitere Behandlung, abgesehen vom Würzen mit Essig, Salz, Pfeffer und dergleichen, direkt als knackiger, farblich und geschmacklich das Ausgangsprodukt hervorragend widerspiegelnder Salat gegessen werden können.

Gemäß Fig. 3 der Zeichnung ist der Temperaturverlauf im Inneren eines Behälters bzw. in dem zu konservierenden Gemüse vom Druck im Inneren des Behälters sowie vom Zusatz eines Inertgases, nämlich Stickstoff, abhängig. Von der in Fig.3 gezeigten Kurvenschar zeigt die Kurve a die Temperatur des Heizmediums, insbesondere die Wasser- bzw. Dampftemperatur im Inneren eines Autoklaven. Die Kurven b bis e zeigen den druckabhängigen Temperaturverlauf im Inneren eines Behälters bzw. einer Dose für einen Anfangsdruck von 0 bzw. -0,5 bzw. -0,75 bzw. -0,9 bar. Ferner zeigen die Kurven f bis h den druckabhängigen Temperaturverlauf im Behälter bei Anwesenheit von Stickstoff (N₂) und bei einem Anfangsdruck von 0 bzw. -0,5 bzw. -0,75 bar.

Man erkennt, daß eine Inertgas- bzw. Stickstoff-Füllung bei reduziertem Innendruck zu einem langsameren Temperaturanstieg und -abfall gegenüber den Fällen führt, in denen bei einem Unterdruck von -0,5 bzw. -0,75 bzw. -0,9 bar kein Stickstoff zugesetzt wird. Außerdem wird gemäß Kurve e deutlich, daß der steilste Temperaturanstieg bei einem reduzierten Innendruck von -0,9 bar (ohne Stickstoffzusatz) erreicht wird. Insgesamt bietet die in Fig. 3 gezeigte Kurvenschar damit wichtige Anhaltspunkte für die Verfahrensführung bei Anwendung des erfindungsgemäßen Verfahrens, wo speziell der steile Kurvenabschnitt c der Kurve 10 schnell durchlaufen werden sollte, um ohne weitere Veränderung des zu konservierenden Gemüses schnell in den Bereich der Sterilisierungstemperaturen zu gelangen.

Wenn die Erwärmung des zu konservierenden Gemüses bei dem zweistufigen Verfahren gemäß der Erfindung mit Hilfe von Mikrowellen durchgeführt werden soll, sind im Prinzip dieselben Bedingungen zu beachten wie beim "Einkochen" des Gemüses in einer Dose oder dergleichen. Ein besonderer Vorteil der Erhitzung des Gemüses in einem Mikrowellenofen besteht jedoch darin, daß der Temperaturverlauf wegen der Möglichkeiten der Dosierung und der zeitlichen Steuerung der Mikrowelleneinwirkung prinzipiell voll zur Steuerung des Prozeßablaufes genutzt werden können. Dabei können zur Erzielung einer gleichmäßigen Temperaturverteilung ggf. Konvektionseinrichtungen und/oder Temperaturausgleichsphasen in der Mikrowellenstrahlung vorgesehen sein. Beim Aufheizen des Gemüses in einem Mikrowellenherd oder dergleichen wird das Gemüse im Herd in einer offenen Schale bzw. allgemein in einem offenen Behälter erhitzt und erst nach Abschluß des zweiten Behandlungsschrittes zur dauerhaften Konservierung in einen Behälter gefüllt, der anschließend geschlossen wird. Dabei ist beim Füllen und Schließen des Behälters auf sterile Bedingungen zu achten, was jedoch in der Praxis keine Probleme mit sich bringt.

Während vorstehend davon ausgegangen wurde, daß sowohl die Enzyme als auch die Kationen aus dem zu konservierenden Gemüse selbst stammen, besteht in Ausgestaltung der Erfindung die Möglichkeit, dem Prozeß von außen gewisse Enzyme und/oder bivalente Kationen sowie ggf. weitere Wirkstoffe zuzusetzen. Dabei hat es sich als besonders vorteilhaft erwiesen, wenn dem Tauchbad, dessen Flüssigkeitsrest beim abgetropften Füllgut die Aufgußmenge bildet, eine gewisse Menge von Kalziumchlorid zugesetzt wird, welches je nach Verweilzeit des Gemüses im Tauchbad sowie in Abhängigkeit von der Größe der Gemüsepartikel mehr oder weniger stark in das Gemüse eindringen kann, um bei den katalytischen Reaktionen während des ersten Behandlungsschrittes zusätzlich als Reagenz zur Verfügung zu stehen.

Insgesamt wird aus der vorstehenden Beschreibung deutlich, daß es mit einem zweistufigen Konservierungsverfahren gemäß der Erfindung möglich ist, in zwei Behandlungsschritten eine fertige Gemüse-Langzeitkonserve herzustellen, welche hinsichtlich Farbe, Aroma und Geruch des konservierten Gemüses sowie hinsichtlich seines Gehalts an wertgebenden Inhaltsstoffen und schließlich seiner Textur, die zu einem gegenüber den bisherigen Konserven deutlich verbesserten "Biß" führt, ein hervorragendes Verfahrensprodukt darstellt, das die eingangs gestellten Forderungen praktisch vollständig erfüllt.

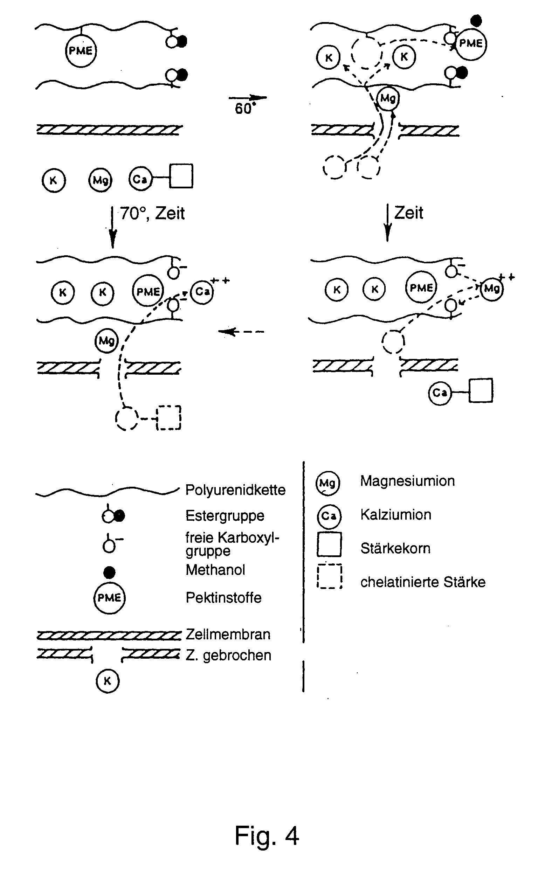

Zusammenfassende, vergleichende Darstellung der Vorgänge beim konventionellen Sterilisieren (1) und bei den beiden Behandlungsschritten gemäß der Erfindung (2a und b):
1. Vorgänge beim bisher üblichen Kochen bzw. Sterilisieren:
   Beim Sterilisieren nicht saurer pflanzlicher Materialien wird das in der Mittel-Lamelle und in den Zellwänden lokalisierte Pektin durch β-Elimination teilweise abgebaut und damit ein Erweichen des Gewebes erreicht. Der Effekt ist vorrangig dadurch verursacht, daß der Abbau der Mittel-Lamelle ca. 30-bis 170mal schneller als der Abbau der Zellwände stattfindet. Die "Verkittung" der Zellen untereinander wird dadurch gelöst. Die Folge ist ein leichteres Verschieben des Zellverbandes untereinander, was allgemein als Erweichen bezeichnet wird.
2a. Vorgänge beim ersten Behandlungsschritt (Enzymeinwirkung):
   Bei Temperaturen ab 50°C wird die Semipermeabilität der Zellmembranen aufgehoben, d.h. die Membranen werden durchlässiger. Gleichzeitig wird die Bindung des Enzyms Pektin-Esterase an die Zellwand gelöst; es besteht für dieses nun die Möglichkeit, eine Abspaltung von Methanol an den Estergruppen des Pektins der Zellwände und der Mittel-Lamelle zu katalysieren. Es entstehen freie Carboxylgruppen am Pektin, die nun mit insbesondere auch aus den Vakuolen an diese Stellen diffundierenden, bivalenten Ionen Chelate bilden, d.h. Pektinstränge miteinander verbinden können. Diese Chelatisierung findet dreidimensional statt, so daß eine Vernetzung bzw. Verfestigung der Zellwandregionen eintritt. Es kann auch von einer Fixierung der Pektinketten gesprochen werden, wodurch sie schwerer abbaubar sind. Diese Zusammenhänge sind in Fig. 4 schematisch dargestellt, die ein Modell für die Erklärung des Verfestigungseffektes bei pflanzlichem Gewebe zeigt.
2b. Vorgänge beim zweiten Behandlungsschritt (Sterilisieren mit vorheriger Enzymeinwirkung):
   Durch die oben beschriebene Entesterung des Pektins mit Hilfe der nativen Pektin-Esterase wird die Anzahl der veresterten Gruppen im Pektin erniedrigt.

Da die beim Erhitzungsvorgang mögliche β-Elimination aber jeweils nur dort im Pektinmolekül stattfinden kann, wo eine veresterte Carboxylgruppe vorliegt, ist diese Reaktion bei vorheriger Durchführung des ersten Behandlungsschrittes nicht in dem Ausmaß möglich, wie ohne Enzymeinwirkung. Die zunächst erreichte Chelatisierung ergibt nach anschließend durchgeführtem Sterilisieren somit eine festere Textur, als wenn allein das Sterilisieren vorgenommen worden wäre. Auch die minimale Aufgußmenge trägt zu einer Verringerung von zur Erweichung führenden Abbauvorgängen bei.

## Patentansprüche

1. Verfahren zum Konservieren von Gemüse, bei dem das Gemüse in einem ersten Behandlungsschritt für die Dauer eines ersten vorgegebenen Zeitintervalls einer in einem ersten vorgegebenen Temperaturintervall liegenden ersten Temperatur ausgesetzt wird, und in einem zweiten Behandlungsschritt, der unmittelbar auf den zweiten Behandlungsschritt folgt für die Dauer eines zweiten vorgegebenen Zeitintervalls, welches kürzer ist als das erste Zeitintervall einer in einem zweiten vorgegebenen Temperaturintervall, welches höhere Temperaturen umfaßt als das erste Temperaturintervall, liegenden zweiten Temperatur, die höher ist als die erste Temperatur,
**dadurch gekennzeichnet**, daß die Dauer des ersten Zeitintervalls und die erste Temperatur derart gewählt werden, daß durch enzymatisch katalysierte Reaktionen eine Fixierung und Verfestigung der Textur des Gemüses herbeigeführt wird und daß die Dauer des zweiten Zeitintervalls und die zweite Temperatur so gewählt werden, daß am Ende des zweiten Zeitintervalls für das eine Dauerkonserve bildende Endprodukt ein vorgegebener Summen-F-Wert erreicht wird.

2. Verfahren nach Anspruch 1, dadurch gekennzeichnet, daß beide Behandlungsschritte in Anwesenheit einer geringen, einen sogenannten Aufguß bildenden Menge von freiem Wasser durchgeführt werden.

3. Verfahren nach Anspruch 2, dadurch gekennzeichnet, daß die Aufgußmenge bis herab zu einem Minimalwert von 1 Vol.-% des Volumens der Produktzwischenräume reduziert ist.

4. Verfahren nach Anspruch 3, dadurch gekennzeichnet, daß die Aufgußmenge auf 2 bis 8 Vol.-%, insbesondere auf maximal 3 Vol.-% reduziert ist.

5. Verfahren nach einem der Ansprüche 1 bis 4, dadurch gekennzeichnet, daß das Gemüse zu Gemüsepartikeln zerkleinert wird.

6. Verfahren nach Anspruch 5, dadurch gekennzeichnet, daß das Gemüse zu Gemüsepartikeln mit einer größten Abmessung von 4 bis 15 mm, vorzugsweise von 6 bis 12 mm und insbesondere von 8 bis 10 mm zerkleinert wird.

7. Verfahren nach Anspruch 2 und 5, dadurch gekennzeichnet, daß die geringe Aufgußmenge dadurch erhalten wird, daß die Gemüsepartikel vor der Durchführung der beiden Behandlungsschritte in ein Tauchbad eingetaucht werden, daß man die Gemüsepartikel dann aus dem Tauchbad heraushebt und abtropfen läßt und daß die abgetropften Gemüsepartikel anschließend zur Durchführung der beiden Behandlungsschritte in einen Behälter gefüllt werden.

8. Verfahren nach Anspruch 7, dadurch gekennzeichnet, daß dem Tauchbad eine vorgegebene Menge eines bivalente Kationen bildenden Salzes zugesetzt wird.

9. Verfahren nach Anspruch 8, dadurch gekennzeichnet, daß dem Tauchbad Kalziumchlorid zugesetzt wird.

10. Verfahren nach einem der Ansprüche 7 bis 9, dadurch gekennzeichnet, daß der Behälter vor der Durchführung der beiden Behandlungsschritte verschlossen wird.

11. Verfahren nach Anspruch 10, dadurch gekennzeichnet, daß in dem Behälter ein Unterdruck erzeugt wird.

12. Verfahren nach Anspruch 10 oder 11, dadurch gekennzeichnet, daß dem Behälter ein Inertgas zugeführt wird.

13. Verfahren nach einem der Ansprüche 1 bis 12, dadurch gekennzeichnet, daß für die Durchführung der enzymatisch katalysierten Reaktionen die planzeneigenen Enzyme des zu konservierenden Gemüses verwendet werden.

14. Verfahren nach einem der Ansprüche 1 bis 13, dadurch gekennzeichnet, daß zur Erhitzung des Gemüses bei der Durchführung mindestens eines der Behandlungsschritte Mikrowellen verwendet werden.

15. Verfahren nach einem der Ansprüche 1 bis 14, dadurch gekennzeichnet, daß die Erhitzung des Gemüses bei der Durchführung mindestens eines der Behandlungsschritte in einem Druckbehälter durchgeführt wird.

16. Verfahren nach einem der Ansprüche 1 bis 15, dadurch gekennzeichnet, daß es als kontinuierliches Verfahren durchgeführt wird.

## Claims

1. Process to preserve vegetables, the vegetable, in a first treatment step, being exposed to a first preset temperature within a first preset temperature range for a first preset time interval, and, in a second treatment step immediately following the first treatment step, to a second temperature being higher than the first temperature, within a second preset temperature range which comprises higher temperatures than the first temperature range for a time interval that is shorter than the first time interval,
**characterized in that**
the length of the first time interval and the first temperature are selected such that, by enzymatically catalyzed reactions, a fixation and solidification of the vegetable texture is achieved, and that the length of the second time interval and the second temperature are chosen such that, at the end of the second time interval, a preset sum-F-value is achieved for the final product being a preserve of long shelf-life.

2. The process of claim 1, characterized in that both treatment steps are carried out in the presence of a small quantity of free water forming a so-called infusion.

3. The process of claim 2, characterized in that the infusion quantity is reduced to a minimum value of 1 vol. % of the volume of the space between product particles.

4. The process of claim 3, characterized in that the infusion quantity is reduced to 2 to 8 vol.%, in particular to max. 3 vol.%.

5. Process according to one of claims 1 through 4, characterized in that the vegetable is cut to vegetable particles.

6. Process of claim 5, characterized in that the vegetable is cut to vegetable particles the largest size of which is 4 to 15 mm, preferrably 6 to 12 mm, and particularly 8 to 10 mm.

7. Process according to claims 2 and 5, characterized in that the small infusion quantity is produced by immersing the vegetable particles into a dipping prior to the two treatment steps, that they are lifted out of the dipping and drained, and that the drained vegetable particles are subsequently filled into a receptacle to accomplish the two treatment steps.

8. Process according to claim 7, characterized in that a preset quantity of a salt forming bivalent cations is added to the dipping.

9. Process according to claim 8, characterized in that calcium chloride is added to the dipping.

10. Process according to one of claims 7 through 9, characterized in that the receptacle is closed before the two treatment steps are started with.

11. Process according to claim 10, characterized in that a vacuum is produced in the receptacle.

12. Process acording to claims 10 or 11, characterized in that an inert gas is supplied into the receptacle.

13. Process according to one of claims 1 through 12, characterized in that, for the purpose of carrying out the enzymatically catalyzed reactions, inherent enzymes of the vegetable to be preserved are used.

14. Process according to one of claim 1 through 13, characterized in that, at least in one of the treatment steps, microwaves are used to heat the vegetable.

15. Process according to one of claims 1 through 14, characterized in that, at least in one of treatment steps, the vegetable is heated in a pressure vessel.

16. Process according to claims 1 through 15, characterized in that it is carried out as a continuous process.

## Revendications

1. Procédé pour la conservation des légumes au moyen duquel les légumes sont exposés à une première étape pour la durée d'un intervalle donné. Une deuxième étape qui suit immédiatement pour la durée d'un deuxième intervalle donné, lequel est plus court que le premier et dont la température est plus élevée caractérise ce procédé car la durée de la première température est choisie de telle sorte que des réactions enzymatiques catalysées entraînent une fixation et une consolidation de la texture des légumes et que la durée du deuxième intervalle et la deuxième température sont choisies de telle sorte qu'à la fin du deuxième intervalle on atteint une valeur donnée F pour la conservation continue du produit.

2. Procédé selon la spécification no. 1 caractérisé par le fait que les deux étapes du traitement sont réalisées en présence d'une très faible quantité d'eau, appellée infusion.

3. Procédé selon la spécification no.2 caractérisé par le fait que la quantité d'infusion est réduite jusqu'à un minimum de 1 vol. -% du volume des espaces entre les produits.

4. Procédé selon la spécification no. 3 caractérisé par le fait que la quantité d'infusion est réduite jusqu'à 2 à 8 vol. -% et en particulier au maximum à 3 vol.-%.

5. Procédé selon une des spécifications 1 à 4, caractérisé par le fait que les légumes sont réduits en petites particules.

6. Procédé selon la spécification 5, caractérisé par le fait que les particules des légumes mesurent de 4 à 15 mm. de préférence de 6 à 12 mm et plus particulièrement de 8 à 10 mm.

7. Procédé selon les spécifications 2 et 5, caractérisé par le fait qu'on obtient une petite quantité d'infusion, que les particules de légumes sont plongées dans un bain avant l'exécution des deux étapes, que les particules sont ensuite retirées du bain et égouttées et que les particules des légumes sont ensuite mises dans des récipients après l'exécution des deux procédés.

8. Procédé selon la spécification no. 7 caractérisé par le fait que le bain est additionné préalablement d'une quantité de sel formant des cations bivalents.

9. Procédé selon la spécification no. 8, caractérisé par le fait que le bain contient du chloride de calcium.

10. Procédé selon les spécifications 7 à 9 caractérisé par le fait que le récipient est fermé avant l'exécution des deux étapes du procédé.

11. Procédé selon la spécification no. 10, caractérisé par le fait que le récipient se trouve sous pression.

12. Procédé selon les spécifications no. 10 et 11, caractérisé par le fait qu'un gaz inerte est introduit dans le récipient.

13. Procédé selon les spécifications no. 1 à 12, caractérisé par le fait que les enzymes propres au légume concerné sont utilisés pour l'exécution des réactions catalysées enzymatiques.

14. Procédé selon les spécifications 1 à 13, caractérisé par le fait que pour le réchauffement des légumes on utilise des micro-ondes pour au moins l'exécution d'une étape du procédé.

15. Procédé selon les spécifications 1 et 14, caractérisé par le fait que le réchauffement des légumes peut avoir lieu sous pression au moins pour une des étapes du procédé.

16. Procédé selon une des spécifications 1 à 15, caractérisé par le fait que ce procédé est un procédé continu.
